# EUROPEAN PATENT APPLICATION

(11) **EP 4 693 646 A1**
(43) Date of publication of application: **11.02.2026**
(21) Application number: 23930876.0
(22) Date of filing: 04.12.2023
(51) Int. Cl.: H01M 50/204, G01K 1/14, H01M 50/289, H01M 50/298, H01M 50/569

(54) **TEMPERATURE SENSOR DEVICE, VOLTAGE DETECTION DEVICE, AND BATTERY MODULE**

(30) Priority: 24.03.2023 JP 2023047776
(71) Applicant: AESC Japan Ltd., Yokohama-shi, Kanagawa 220-0012 (JP)
(72) Inventor: OKAZUMI, Ryoma, Zama-shi, Kanagawa 252-0012 (JP); NUMAKURA, Ayaka, Zama-shi, Kanagawa 252-0012 (JP)
(74) Representative: Mathys & Squire
(86) International application number: PCT/JP2023/043252
(87) International publication number: WO 2024/202251

(57) **Abstract**

A temperature sensor device (30) includes a partial protector (300) covering at least a part of a battery cell (100), a support body (310) held on a holding structure (302) of the partial protector (300), a temperature sensor element (320) supported by the support body (310), and a temperature sensor wire (330) routed via a routing structure (304) of the partial protector (300) displaced in a predetermined direction from the holding structure (302) and electrically connected to the temperature sensor element (320). The support body (310) includes a drawn portion (314) drawn from the holding structure (302) and an attachment portion (316) displaced in the predetermined direction from the drawn portion (314) with the temperature sensor element (320) attached to the attachment portion (316).

## Description

### TECHNICAL FIELD

The present invention relates to a temperature sensor device, a voltage detection device, and a battery module.

### BACKGROUND ART

In recent years, various temperature sensor devices for use in battery modules have been developed. A battery module includes a plurality of battery cells. The temperature sensor device includes a temperature sensor element that detects the temperature of a battery cell.

Patent Document 1 describes one example of a temperature sensor device. The temperature sensor device includes a temperature detection element, and an element holder that holds the temperature detection element. A pair of electric wires are drawn from the upper end portion of the temperature detection element.

Patent Document 2 describes one example of a temperature sensor device. The temperature sensor device includes a thermistor and a coil spring that presses the thermistor against a battery cell.

### RELATED DOCUMENT

### PATENT DOCUMENT

Patent Document 1: Japanese Patent Application Publication No. 2013-171697
Patent Document 2: Japanese Patent Application Publication No. 2018-045858

### DISCLOSURE OF THE INVENTION

### TECHNICAL PROBLEM

In a temperature sensor device for use in a battery module, a temperature sensor element may be supported by a support body that is held by a protector that covers at least a part of a battery cell, and a temperature sensor wire that is electrically connected to the temperature sensor element may be routed via the protector. When routing the temperature sensor wire, it is necessary to reduce breakage of the temperature sensor wire caused by bending the temperature sensor wire and to reduce damage to the inner element of the temperature sensor element due to tensile load applied to the temperature sensor element via the temperature sensor wire.

An example of the object of the present invention is to reduce damage to a temperature sensor member such as the temperature sensor wire and the temperature sensor element caused by routing the temperature sensor wire. Another object of the present invention will be clarified from description of the present specification.

### SOLUTION TO PROBLEM

An aspect of the present invention is as follows.
[1] A temperature sensor device including:
   a protector covering at least a part of a battery cell;
   a support body held on a predetermined first structure of the protector;
   a temperature sensor element supported by the support body; and
   a temperature sensor wire routed via a second structure of the protector displaced in a predetermined direction from the first structure, the temperature sensor wire being electrically connected to the temperature sensor element, wherein
   the support body includes a first portion drawn from the first structure and a second portion displaced in the predetermined direction from the first portion with the temperature sensor element attached to the second portion.
[2] The temperature sensor device according to [1], wherein
   the support body includes a structure to regulate a twist between the first portion and the second portion.
[3] The temperature sensor device according to [1] or [2], wherein
   at least a part of the temperature sensor wire between the temperature sensor element and the second structure is displaced from a shortest route from the temperature sensor element to the second structure.
[4] The temperature sensor device according to any one of [1] to [3], wherein
   the second structure includes a first locking portion to lock the temperature sensor wire at a predetermined first position and a second locking portion to lock the temperature sensor wire at a second position further away from the temperature sensor element than the first position, and
   the second position is displaced to an opposite side of the first position from a side where the temperature sensor element is located.
[5] The temperature sensor device according to any one of [1] to [4], further including
   a joining portion at least partially joining the support body and the temperature sensor wire to each other.
[6] A temperature sensor device including:
   a protector covering at least a part of a battery cell;
   a support body held on the protector;
   a temperature sensor element supported by the support body;
   a temperature sensor wire electrically connected to the temperature sensor element and routed via the protector; and
   a joining portion at least partially joining the support body and the temperature sensor wire to each other.
[7] A voltage detection device including:
   the sensor device according to any one of [1] to [6]; and
   a voltage detection terminal held by the protector so as to detect a voltage of the battery cell.
[8] A battery module including:
   the voltage detection device according to [7]; and
   the battery cell.

### ADVANTAGEOUS EFFECTS OF INVENTION

According to the above aspect of the present invention, damage to the temperature sensor member caused by routing the temperature sensor wire can be reduced.

### BRIEF DESCRIPTION OF THE DRAWINGS

[Fig. 1] An exploded perspective view of a battery module according to an embodiment.
[Fig. 2] A rear perspective view of a voltage detection device according to the embodiment.
[Fig. 3] A rear perspective view of a temperature sensor device located at the region α enclosed by a dash-dotted line of the upper left end portion of the voltage detection device as viewed from a rear side in Fig. 2.
[Fig. 4] A right side view of the temperature sensor device located at the region α enclosed by the dash-dotted line of the upper left end portion of the voltage detection device as viewed from the rear side in Fig. 2.
[Fig. 5] A left side view of the temperature sensor device located at the region β enclosed by a dash-dotted line of the lower substantially middle portion of the voltage detection device as viewed from the rear side in Fig. 2.
[Fig. 6] A cross-sectional schematic view of the temperature sensor device located at the lower portion of the voltage detection device.

### DESCRIPTION OF EMBODIMENTS

Hereinafter, an embodiment according to the present invention is described by using the drawings. In all drawings, a similar constituent element is indicated by a similar reference sign and description thereof is omitted as necessary.

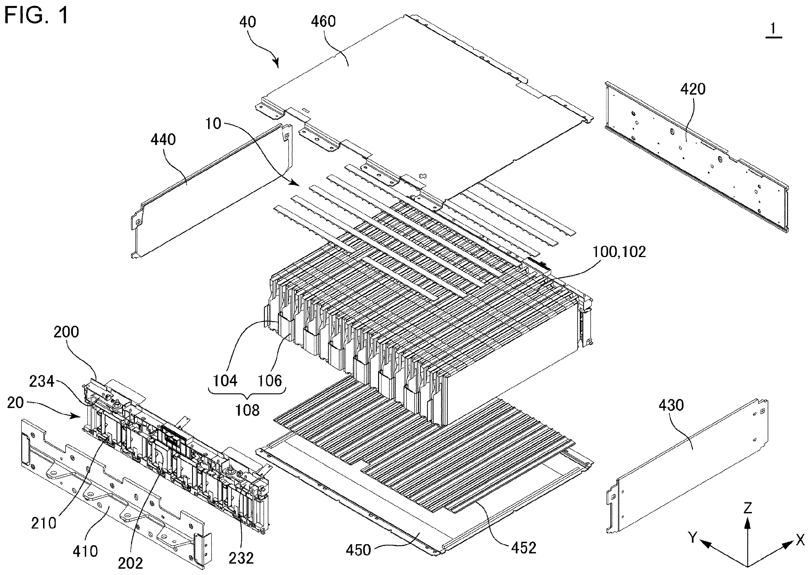

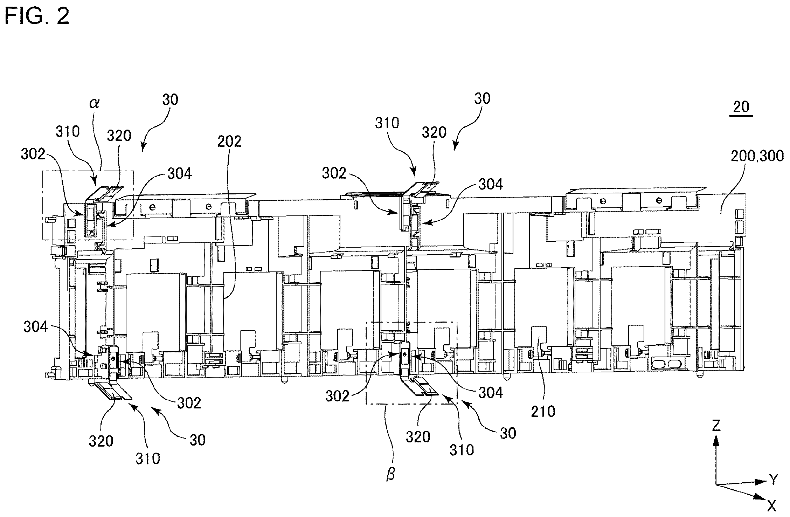

Fig. 1 is an exploded perspective view of a battery module 1 according to an embodiment. Fig. 2 is a rear perspective view of a voltage detection device 20 according to the embodiment.

In each drawing, the arrows indicating the X direction, the Y direction, and the Z direction are indicated for explanation. Hereinafter, unless otherwise specifically noted, the tip end side of the arrow indicating the X direction is a rear side of the battery module 1 and the base end side of the arrow indicating the X direction is a front side of the battery module 1. The Y direction is orthogonal to the X direction. The Y direction is a left-right direction of the battery module 1. Hereinafter, unless otherwise specifically noted, the tip end side of the arrow indicating the Y direction is a left side of the battery module 1 and the base end side of the arrow indicating the Y direction is a right side of the battery module 1. The Z direction is orthogonal to both the X direction and the Y direction. The Z direction is an up-down direction of the battery module 1. Hereinafter, unless otherwise specifically noted, the tip end side of the arrow indicating the Z direction is an upper side of the battery module 1 and the base end side of the arrow indicating the Z direction is a lower side of the battery module 1. Hereinafter, as necessary, the tip end side and the base end side of the arrow indicating the X direction are referred to as a +X side and a -X side respectively, the tip end side and the base end side of the arrow indicating the Y direction are referred to as a +Y side and a -Y side respectively, and the tip end side and the base end side of the arrow indicating the Z direction are referred to as a +Z side and a -Z side respectively. The relationship between each of the X direction, the Y direction, the Z direction, the front-rear direction, the left-right direction, and the up-down direction of the battery module 1 is not limited to the above example.

The battery module 1 is described with reference to Figs. 1 and 2.

The battery module 1 includes a cell stack 10, the voltage detection device 20, a plurality of temperature sensor devices 30, and an accommodation body 40.

The cell stack 10 includes a plurality of battery cells 100. A plurality of the battery cells 100 is stacked in the Y direction. The longitudinal direction of each battery cell 100 is substantially in parallel to the X direction. The short direction of each battery cell 100 is substantially in parallel to the Z direction. The thickness direction of each battery cell 100 is substantially in parallel to the Y direction. The shape of each battery cell 100 is not limited to this example.

Each battery cell 100 includes an unillustrated battery element, an exterior member 102, a positive electrode tab 104, and a negative electrode tab 106. **In** one example, the battery element includes a plurality of unillustrated positive electrodes and a plurality of unillustrated negative electrodes that are alternately stacked in the Y direction, and an unillustrated separator that is located between the positive electrode and the negative electrode adjacent to each other in the Y direction. The exterior member 102 seals the battery element and unillustrated electrolytic liquid. The positive electrode tab 104 is electrically connected to the positive electrode of the battery element. The positive electrode tab 104 is drawn from one of opposite sides of the exterior member 102 in the X direction. The negative electrode tab 106 is electrically connected to the negative electrode of the battery element. The negative electrode tab 106 is drawn from the other of opposite sides of the exterior member 102 in the X direction. However, the structure of each battery cell 100 is not limited to this example.

Each battery cell 100 may be a solid-state battery. In the solid-state battery, a solid electrolyte layer is provided at a portion corresponding to the separator. The solid-state battery does not include electrolytic liquid. Hereinafter, unless otherwise specifically noted, each battery cell 100 is described as a battery cell including electrolytic liquid.

In the embodiment, a plurality of the battery cells 100 is electrically connected by combination of in series and in parallel. Specifically, a cell group including at least two battery cells 100 that are adjacent to each other in the Y direction and are connected in parallel are stacked in the Y direction and connected in series. In front of the cell stack 10, the positive electrode tabs 104 drawn from the battery cells 100 of the parallel-connected cell group and the negative electrode tabs 106 drawn from the battery cells 100 of another parallel-connected cell group are electrically connected to each other to form a tab connection portion 108 including the positive electrode tabs 104 and the negative electrode tabs 106. The positive electrode tabs 104 and the negative electrode tabs 106 in the tab connection portion 108 are joined to each other by laser welding, for example. Similarly, a tab group is formed behind the cell stack 10. Thus, a plurality of cell groups is connected in series from the above cell group located on one end side of the cell stack 10 in the Y direction to the above cell group located on the other end side of the cell stack 10 in the Y direction.

Electrical connection of a plurality of the battery cells 100 is not limited to the above example. For example, the cell stack 10 may be configured by connecting a single battery cell 100 in series.

The voltage detection device 20 detects voltage of a plurality of the battery cells 100. The voltage detection device 20 includes a protector 200, a plurality of voltage detection terminals 210, a positive electrode bus bar 232, and a negative electrode bus bar 234.

The protector 200 covers the front portion of the cell stack 10. The protector 200 defines a plurality of openings 202. Each of a plurality of the tab connection portions 108 is exposed forward through each of a plurality of the openings 202. The protector 200 integrally holds a plurality of the voltage detection terminals 210. Thus, each of a plurality of the voltage detection terminals 210 can be disposed at an appropriate position with respect to each of a plurality of the tab connection portions 108 by installing the protector 200 at an appropriate position with respect to the cell stack 10.

The rear surface of each voltage detection terminal 210 and the front surface of each tab connection portion 108 are joined to each other by a joining method such as laser welding, for example. Thus, each voltage detection terminal 210 and each tab connection portion 108 are electrically connected to each other. Therefore, each voltage detection terminal 210 can detect a voltage of each tab connection portion 108. Each voltage detection terminal 210 is electrically connected to one end of a voltage detection wire such as an unillustrated harness. Thus, a plurality of the voltage detection terminals 210 can be electrically connected to an unillustrated connector via a plurality of the voltage detection wires.

The positive electrode bus bar 232 is disposed at the right end portion of the protector 200. The positive electrode bus bar 232 is electrically connected to the positive electrode tab 104 drawn from the cell group located at the right end portion of the cell stack 10. The positive electrode bus bar 232 functions as an external terminal for electrically connecting the battery module 1 to an external device such as another battery module.

The negative electrode bus bar 234 is disposed at the left end portion of the protector 200. The negative electrode bus bar 234 is electrically connected to the negative electrode tab 106 drawn from the cell group located at the left end portion of the cell stack 10. The negative electrode bus bar 234 functions as an external terminal for electrically connecting the battery module 1 to an external device such as another battery module.

**In** the embodiment, the terminal positive electrode tabs 104 of a plurality of serially connected cell groups are the positive electrode tabs 104 drawn forward from the battery cells 100 of the cell group located at the right end side of the cell stack 10, and the terminal negative electrode tabs 106 of a plurality of serially connected cell groups are the negative electrode tabs 106 drawn forward from the battery cells 100 of the cell group located at the left end side of the cell stack 10. Thus, both the positive electrode bus bar 232 and the negative electrode bus bar 234 are disposed in front of the battery cell 100. However, the disposition of the terminal positive electrode tab 104 and the negative electrode tab 106 of a plurality of serially connected cell groups may differ depending on the number of the battery cells 100 included in the cell stack 10. For example, consider a case where the terminal positive electrode tabs 104 of a plurality of serially connected cell groups are the positive electrode tabs 104 drawn rearward from the battery cells 100 of the cell group located at the right end side of the cell stack 10 and the terminal negative electrode tabs 106 of a plurality of serially connected cell groups are the negative electrode tabs 106 drawn forward from battery cells 100 of the cell group located at the left end side of the cell stack 10. **In** this case, the positive electrode bus bar 232 is disposed behind the cell stack 10 and the negative electrode bus bar 234 is disposed in front of the cell stack 10.

As illustrated in Fig. 2, a plurality of the temperature sensor devices 30 is provided at the voltage detection device 20. **In** an example illustrated in Fig. 2, as viewed from the rear side of the voltage detection device 20, four temperature sensor devices 30 are provided at four positions of the upper substantially middle portion, the upper left end portion, the lower substantially middle portion, and the lower left end portion of the voltage detection device 20. However, the disposition of a plurality of the temperature sensor devices 30 is not limited to this example. The number of the temperature sensor devices 30 provided at the voltage detection device 20 may be only one.

The accommodation body 40 includes a front plate 410, a rear plate 420, a right plate 430, a left plate 440, a lower plate 450, and an upper plate 460. Each cover is composed of metal such as aluminum, for example. The front plate 410 covers the front portion of the cell stack 10 and the voltage detection device 20. The rear plate 420 covers the rear portion of the cell stack 10. The right plate 430 covers the right portion of the cell stack 10. The left plate 440 covers the left portion of the cell stack 10. The lower plate 450 covers the lower portion of the cell stack 10. A thermally conductive adhesive 452 is disposed between the upper surface of the lower plate 450 and the lower end of the cell stack 10. Thus, heat generated from the cell stack 10 can be released downward of the battery module 1 through the thermally conductive adhesive 452. The upper plate 460 covers the upper portion of the cell stack 10.

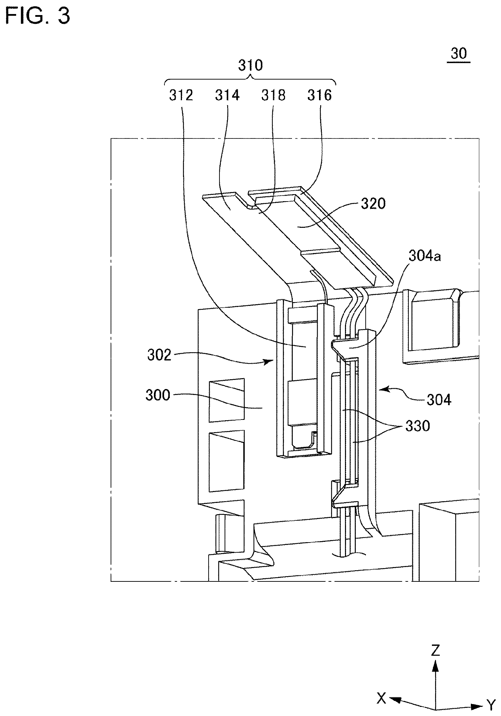

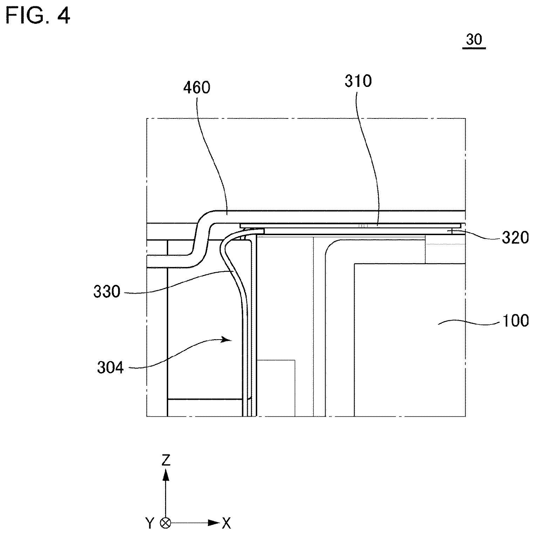

Fig. 3 is a rear perspective view of the temperature sensor device 30 located at the region α enclosed by a dash-dotted line of the upper left end portion of the voltage detection device 20 as viewed from the rear side in Fig. 2. Fig. 4 is a right side view of the temperature sensor device 30 located at the region α enclosed by the dash-dotted line of the upper left end portion of the voltage detection device 20 as viewed from the rear side in Fig. 2. **In** Fig. 4, the white circle with X indicating the Y direction indicates that the +Y side is a side directed rearward from the front of paper and the -Y side is a side directed forward from the depth of paper.

Referring to Figs. 3 and 4 and referring to Fig. 2 as necessary, the temperature sensor device 30 located at the upper left end portion of the voltage detection device 20 as viewed from the rear side is described. The temperature sensor device 30 includes a partial protector 300, a support body 310, a temperature sensor element 320, and a pair of temperature sensor wires 330. The partial protector 300 includes a holding structure 302 and a routing structure 304. The support body 310 includes a base end portion 312, a drawn portion 314, an attachment portion 316, and a connection portion 318.

The partial protector 300 is the upper left end portion of the protector 200 of the voltage detection device 20 as viewed from the rear side. That is, the partial protector 300 is a part of the protector 200. As illustrated in Fig. 3, the holding structure 302 and the routing structure 304 are displaced from each other substantially in parallel to the Y direction. **In** the embodiment, as illustrated in Fig. 2, the holding structure 302 and the routing structure 304 of the temperature sensor device 30 located at the upper left end portion of the voltage detection device 20 as viewed from the rear side are displaced from each other substantially in parallel to the Y direction. The same applies to the holding structure 302 and the routing structure 304 of the other temperature sensor devices 30.

The support body 310 is composed of resin such as polyethylene terephthalate (PET), and polyvinyl chloride (PVC), for example. The base end portion 312 is held on the partial protector 300 by the holding structure 302. Specifically, the base end portion 312 is inserted through an insertion hole defined by the holding structure 302 substantially in parallel to the Z direction. However, the structure for holding the base end portion 312 on the partial protector 300 is not limited to the insertion hole. The drawn portion 314 is drawn from the insertion hole of the holding structure 302. The drawn portion 314 is bent rearward with respect to the base end portion 312. As illustrated in Fig. 3, the rear end portion of the drawn portion 314 is directed rearward obliquely upward when external force is not applied to the drawn portion 314. The drawn portion 314 and the attachment portion 316 are connected to each other via the connection portion 318. The attachment portion 316 is displaced to the right side from the drawn portion 314 as viewed from the rear side. That is, the drawn portion 314 and the attachment portion 316 are displaced from each other substantially in parallel to the Y direction. The connection portion 318 is located between the drawn portion 314 and the attachment portion 316 in the Y direction.

The temperature sensor element 320 is attached to the lower surface of the attachment portion 316. Thus, as illustrated in Fig. 4, pressing the upper surface of each of the drawn portion 314 and the attachment portion 316 downward using the lower surface of the upper plate 460 will press the lower surface of the temperature sensor element 320 against the upper end of the battery cell 100 below. Therefore, the temperature sensor element 320 can detect the temperature of the battery cell 100 with the lower surface of the temperature sensor element 320 and the upper end of the battery cell 100 in contact with each other.

A pair of the temperature sensor wires 330 is drawn downward from the front end portion of the temperature sensor element 320. The pair of the temperature sensor wires 330 and the temperature sensor element 320 are electrically connected to each other. Each temperature sensor wire 330 is a harness, for example. Each temperature sensor wire 330 is routed substantially in parallel to the Z direction by the routing structure 304. Specifically, in an example illustrated in Fig. 3, the routing structure 304 includes a claw 304a. The claw 304a is located behind the pair of the temperature sensor wires 330. Thus, the pair of the temperature sensor wires 330 can be guided substantially in parallel to the Z direction by the claw 304a.

In the embodiment, the position of the drawn portion 314 in the Y direction and the position of the holding structure 302 in the Y direction are aligned in the Y direction, and the position of the attachment portion 316 in the Y direction and the position of the routing structure 304 in the Y direction are aligned in the Y direction. Consider a case in which the temperature sensor element 320 is attached to the drawn portion 314 with the support body 310 lacking the attachment portion 316 and the connection portion 318. In this case, the Y direction position of the routing structure 304 and the Y direction position of the portion of the temperature sensor element 320 from which each temperature sensor wire 330 is drawn are displaced from each other in the Y direction. Thus, each temperature sensor wire 330 may be bent with a relatively large curvature between the temperature sensor element 320 and the routing structure 304 to avoid interference between the support body 310 and each temperature sensor wire 330. When each temperature sensor wire 330 is bent with the relatively large curvature, a relatively large load may be applied to the temperature sensor wire 330 between the temperature sensor element 320 and the routing structure 304. When the relatively large load is applied to each temperature sensor wire 330 between the temperature sensor element 320 and the routing structure 304, it may be difficult to reduce breakage of each temperature sensor wire 330 between the temperature sensor element 320 and the routing structure 304. **In** the embodiment, on the other hand, the Y direction position of the routing structure 304 and the Y direction position of the portion of the temperature sensor element 320 from which each temperature sensor wire 330 is drawn are aligned in the Y direction. Thus, the load applied to each temperature sensor wire 330 between the temperature sensor element 320 and the routing structure 304 can be reduced as compared with the previously described case. Therefore, in the embodiment, the breakage of each temperature sensor wire 330 between the temperature sensor element 320 and the routing structure 304 can be reduced compared to the previously described case.

In the embodiment, the support body 310 is provided with slits at the front portion of the connection portion 318 and at the rear portion of the connection portion 318. The slits can function as a mark of the position at which the temperature sensor element 320 is attached to the attachment portion 316. For example, the -Y side edge of the temperature sensor element 320 and the +Y side edge of the slits can be aligned to each other. In addition, the length of the connection portion 318 in the X direction is relatively long. For example, when the drawn portion 314, the attachment portion 316, and the connection portion 318 are disposed substantially in parallel to the X direction, the length of the connection portion 318 in the X direction can be 60 % or more of the length of the attachment portion 316 in the X direction. Thus, the connection portion 318 has a structure to regulate a twist between the drawn portion 314 and the connection portion 318. In the embodiment, for example, even if the attachment portion 316 and the temperature sensor element 320 are pressed toward the battery cell 100 below using the upper plate 460, the attachment portion 316 is less likely to twist relative to the drawn portion 314 than if the length of the connection portion 318 in the X direction is relatively short. Thus, when the attachment portion 316 and the temperature sensor element 320 are pressed downward using the upper plate 460, the temperature sensor element 320 can be more easily positioned in a desired position in the embodiment than in the previously described case.

The slits in front of and behind the connection portion 318 may not be present. Alternatively, only one slit may be formed either in front of or behind the connection portion 318.

**In** the embodiment, as illustrated in Fig. 4, at least a part of the temperature sensor wire 330 between the front end portion of the temperature sensor element 320 and the upper end portion of the routing structure 304 is displaced toward the -X side from the shortest route from the front end portion of the temperature sensor element 320 to the upper end portion of the routing structure 304. In the example illustrated in Fig. 4, the shortest route from the front end portion of the temperature sensor element 320 to the upper end portion of the routing structure 304 is a route extending substantially in parallel to the Z direction from the front end portion of the temperature sensor element 320 to the upper end portion of the routing structure 304. If the temperature sensor wire 330 passes through the shortest route, the temperature sensor wire 330 may be bent with a relatively large curvature near the front end portion of the temperature sensor element 320. In the example illustrated in Fig. 4, on the other hand, the curvature of bending of the temperature sensor wire 330 between the front end portion of the temperature sensor element 320 and the upper end portion of the routing structure 304 can be reduced compared to when the temperature sensor wire 330 passes through the above shortest route. Therefore, breakage of the temperature sensor wire 330 can be reduced in the example illustrated in Fig. 4 as compared to when the temperature sensor wire 330 passes through the previously described shortest route.

The description regarding the temperature sensor device 30 located at the upper left end portion of the voltage detection device 20 as viewed from the rear side by using Figs. 3 and 4 is also applicable to the temperature sensor devices 30 located at other positions of the voltage detection device 20.

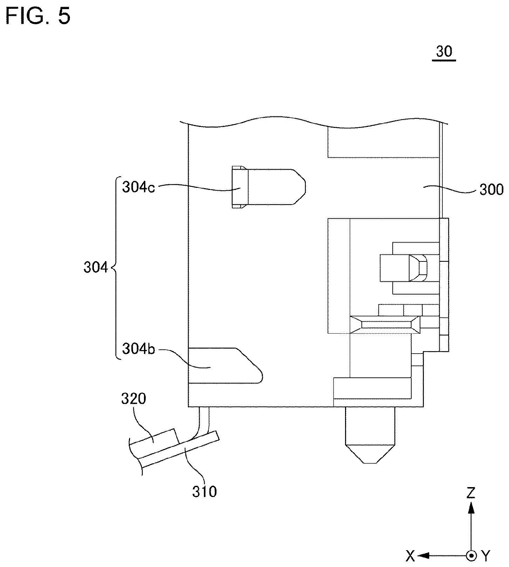

Fig. 5 is a left side view of the temperature sensor device 30 located at the region β enclosed by a dash-dotted line of the lower substantially middle portion of the voltage detection device 20 as viewed from the rear side in Fig. 2. **In** Fig. 5, the white circle with the black dot indicating the Y direction indicates that the +Y side is a side directed forward from the depth of paper and the -Y side is a side directed rearward from the front of paper. Fig. 5 illustrates the temperature sensor device 30 with a temperature sensor wire corresponding to the pair of the temperature sensor wires 330 illustrated in Figs. 3 and 4 removed.

Referring to Fig. 5 and referring to Fig. 2 as necessary, the temperature sensor device 30 located at the lower substantially middle portion of the voltage detection device 20 as viewed from the rear side is described.

As illustrated in Fig. 5, the routing structure 304 includes a lower locking portion 304b and an upper locking portion 304c. The lower locking portion 304b locks the temperature sensor wire 330 at the position near the temperature sensor element 320. The lower locking portion 304b is a hook structure open forward. Thus, the temperature sensor wire 330 can be locked to the lower locking portion 304b by inserting the temperature sensor wire 330 into the hook structure of the lower locking portion 304b from the front side of the lower locking portion 304b. The upper locking portion 304c locks the temperature sensor wire 330 at the position further away from the temperature sensor element 320 than the position of the lower locking portion 304b. Like the lower locking portion 304b, the upper locking portion 304c is a hook structure open forward.

**In** the example illustrated in Fig. 5, the Z direction position of the upper locking portion 304c is displaced to the +Z side relative to the Z direction position of the lower locking portion 304b. **In** addition, the X direction position of the upper locking portion 304c is displaced to the -X side relative to the X direction position of the lower locking portion 304b. **In** other words, the X direction position of the upper locking portion 304c is located on the opposite side of the X direction position of the lower locking portion 304b from the side where the temperature sensor element 320 is located. Consider a case in which the X direction position of the upper locking portion 304c is displaced to the +X side from the position illustrated in Fig. 5 such that the X direction position of the lower locking portion 304b and the X direction position of the upper locking portion 304c are aligned in the X direction. **In** this case, the temperature sensor wire 330 may bent with a relatively large curvature from the front end portion of the temperature sensor element 320 through the lower locking portion 304b to the upper locking portion 304c. In the embodiment, on the other hand, the curvature of bending of the temperature sensor wire 330 from the front end portion of the temperature sensor element 320 through the lower locking portion 304b to the upper locking portion 304c can be reduced as compared with the case describe above. Therefore, breakage of the temperature sensor wire 330 can be reduced in the embodiment as compared to the previously described case.

The position of the lower locking portion 304b and the position of the upper locking portion 304c are not limited to the example illustrated in Fig. 5. For example, the position of the lower locking portion 304b may not be near the temperature sensor element 320, provided that the position of the lower locking portion 304b is closer to the position of the temperature sensor element 320 than the position of the upper locking portion 304c.

The description regarding the temperature sensor device 30 located at the lower substantially middle portion of the voltage detection device 20 as viewed from the rear side by using Fig. 5 is also applicable to the temperature sensor devices 30 located at other positions of the voltage detection device 20.

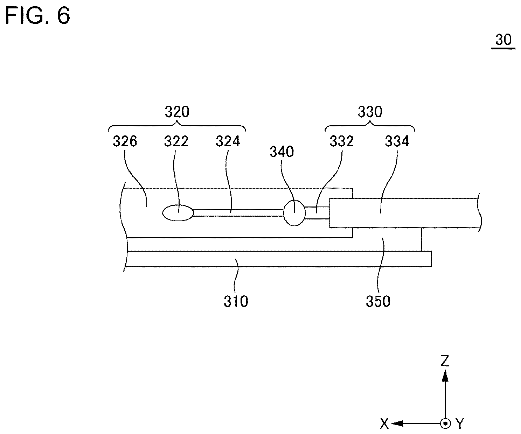

Fig. 6 is a cross-sectional schematic view of the temperature sensor device 30 located at the lower portion of the voltage detection device 20. In Fig. 6, the white circle with the black dot indicating the Y direction indicates that the +Y side is a side directed forward from the depth of paper and the -Y side is a side directed rearward from the front of paper.

The temperature sensor device 30 located at the lower portion of the voltage detection device 20 is described with reference to Fig. 6. The description using Fig. 6 is also applicable to the temperature sensor device 30 located at the upper portion of the voltage detection device 20.

The temperature sensor element 320 includes a thermistor 322, a dumet wire 324, and a sealing body 326. The temperature sensor wire 330 includes an inner conductor 332 and a covering body 334. The thermistor 322 and the dumet wire 324 are sealed with the sealing body 326. One end portion on the +X side of the dumet wire 324 is electrically connected to the thermistor 322. The inner conductor 332 is covered by the covering body 334 except for one end portion of the +X side of the inner conductor 332. One end portion of the +X side of the inner conductor 332 is exposed from the covering body 334. One end portion of the +X side of the inner conductor 332 is inserted into the sealing body 326. The other end portion of the -X side of the dumet wire 324 and one end portion of the +X side of the inner conductor 332 are electrically connected to each other via a connection conductor 340 located between the other end portion of the -X side of the dumet wire 324 and the one end portion of the +X side of the inner conductor 332.

The upper surface of the support body 310 and the lower surface of the sealing body 326 are joined to each other via an adhesive 350. The adhesive 350 is located not only between the upper surface of the support body 310 and the lower surface of the sealing body 326 but also between the upper surface of the support body 310 and the lower surface of the covering body 334. Thus, the upper surface of the support body 310 and the lower surface of the covering body 334 are also joined to each other via the adhesive 350. Consider a case in which the adhesive 350 is not located between the upper surface of the support body 310 and the lower surface of the covering body 334. In this case, when routing the temperature sensor wire 330, it may be relatively difficult to reduce damage to the inner element of the sealing body 326 in the temperature sensor element 320 due to tensile load applied to the temperature sensor element 320 via the temperature sensor wire 330. In the embodiment, on the other hand, it can be less likely that the tensile load is applied to the temperature sensor element 320 via the temperature sensor wire 330 as compared to the previously described case. Therefore, in the embodiment, the damage to the inner element of the sealing body 326 in the temperature sensor element 320 can be reduced as compared to the previously described case.

A joining portion that joins the support body 310 and the temperature sensor wire 330 to each other is not limited to the adhesive 350. For example, in place of the adhesive 350, a fixing tool that fixes the support body 310 and the temperature sensor wire 330 to each other may be used as the joining portion.

The embodiment according to the present invention has been described with reference to the drawings, but these are examples of the present invention and various configurations other than the above may be adopted.

This application claims priority based on Japanese patent application No. 2023-047776, filed on March 24, 2023, the disclosure of which is incorporated herein in its entirety by reference.

### REFERENCE SIGNS LIST

1 Battery module, 10 Cell stack, 20 Voltage detection device, 30 Temperature sensor device, 40 Accommodation body, 100 Battery cell, 102 Exterior member, 104 Positive electrode tab, 106 Negative electrode tab, 108 Tab connection portion, 200 Protector, 202 Opening, 210 Voltage detection terminal, 232 Positive electrode bus bar, 234 Negative electrode bus bar, 300 Partial protector, 302 Holding structure, 304 Routing structure, 304a Claw, 304b Lower locking portion, 304c Upper locking portion, 310 Support body, 312 Base end portion, 314 Drawn portion, 316 Attachment portion, 318 Connection portion, 320 Temperature sensor element, 322 Thermistor, 324 Dumet wire, 326 Sealing body, 330 Temperature sensor wire, 332 Inner conductor, 334 Covering body, 340 Connection conductor, 350 Adhesive, 410 Front plate, 420 Rear plate, 430 Right plate, 440 Left plate, 450 Lower plate, 452 Thermally conductive adhesive, 460 Upper plate

## Claims

1. A temperature sensor device comprising:
a protector covering at least a part of a battery cell;
a support body held on a predetermined first structure of the protector;
a temperature sensor element supported by the support body; and
a temperature sensor wire routed via a second structure of the protector displaced in a predetermined direction from the first structure, the temperature sensor wire being electrically connected to the temperature sensor element, wherein
the support body includes a first portion drawn from the first structure and a second portion displaced in the predetermined direction from the first portion with the temperature sensor element attached to the second portion.

2. The temperature sensor device according to claim 1, wherein
the support body includes a structure to regulate a twist between the first portion and the second portion.

3. The temperature sensor device according to claim 1, wherein
at least a part of the temperature sensor wire between the temperature sensor element and the second structure is displaced from a shortest route from the temperature sensor element to the second structure.

4. The temperature sensor device according to claim 1, wherein
the second structure includes a first locking portion to lock the temperature sensor wire at a predetermined first position and a second locking portion to lock the temperature sensor wire at a second position further away from the temperature sensor element than the first position, and
the second position is displaced to an opposite side of the first position from a side where the temperature sensor element is located.

5. The temperature sensor device according to claim 1, further comprising
a joining portion at least partially joining the support body and the temperature sensor wire to each other.

6. A temperature sensor device comprising:
a protector covering at least a part of a battery cell;
a support body held on the protector;
a temperature sensor element supported by the support body;
a temperature sensor wire electrically connected to the temperature sensor element and routed via the protector; and
a joining portion at least partially joining the support body and the temperature sensor wire to each other.

7. A voltage detection device comprising:
the sensor device according to any one of claims 1 to 6; and
a voltage detection terminal held by the protector so as to detect a voltage of the battery cell.

8. A battery module comprising:
the voltage detection device according to claim 7; and
the battery cell.
